# EUROPÄISCHE PATENTSCHRIFT

(11) **EP 1 611 940 B1**
(45) Veröffentlichungstag und Bekanntmachung des Hinweises auf die Patenterteilung: **04.06.2008**
(21) Anmeldenummer: 04017593.7
(22) Anmeldetag: 24.07.2004
(51) Int. Cl.: B01D 61/02, B01D 61/14, C12H 1/06, C12H 1/00, C12G 3/08

(54) **Verfahren zur Herstellung von Bier mit veränderten Bierinhaltsstoffen**
Process for the production of beer having modified beer ingredients
Procédé de production de bière présentant des ingrédients modifiés

(30) Priorität: 14.06.2004 DE 102004028728
(43) Veröffentlichungstag der Anmeldung: 04.01.2006
(73) Patentinhaber: Warsteiner Brauerei Haus Cramer KG, 59581 Warstein (DE)
(72) Erfinder: Möller-Hergt, Gustavo Dr., 59555 Lippstadt (DE)
(74) Vertreter: Basfeld, Rainer

(56) Entgegenhaltungen:
- EP-A- 0 388 628
- EP-A- 1 028 163
- WO-A-92/08783
- CH-A- 682 636
- US-A- 5 324 435
- US-A- 5 439 699

## Beschreibung

Die vorliegende Erfindung betrifft ein Verfahren zur Herstellung von Bier, bei dem man ausgehend von einem Ausgangsbier die Konzentration bestimmter in diesem Ausgangsbier enthaltener Inhaltsstoffe anreichert und/oder verringert, um daraus ein Produktbier mit definierten Inhaltsstoffen zu gewinnen, nach dem Oberbegriff des Anspruchs 1.

In der Brautechnologie werden durch Filtration nach dem bisherigen Stand der Technik lediglich Biere von Trübstoffen befreit beziehungsweise einzelne Inhaltsstoffe des Biers werden über Absorber, wie zum Beispiel Kieselsäuregele, Aktivkohle ect. entfernt und somit werden die Biere "geschönt". Bislang ist es jedoch nicht üblich, Biere durch Filtration gezielt in einzelne Stoffgruppen zu trennen, um bestimmte Anreicherungen beziehungsweise Reduzierungen bestimmter Inhaltsstoffe auf der Filtratbeziehungsweise Retentatseite zu erreichen. Davon ausgenommen ist allerdings die Anwendung der Umkehrosmose zur Herstellung von alkoholfreien Bieren durch Abtrennung des Alkohols, der aber nicht zur weiteren Verwendung innerhalb dieser Biercharge genutzt wird.

Da in Deutschland bekanntlich das sogenannte Reinheitsgebot gilt, durch das die Ausgangsstoffe zur Verwendung beim Bierbrauen festgelegt sind, war es in Deutschland mit den herkömmlichen Methoden in der Brautechnik nur sehr eingeschränkt möglich, Biere zu brauen, die hinsichtlich bestimmter gewünschter oder weniger erwünschter Inhaltsstoffe gezielt angereichert oder reduziert sind.

Die nicht vorveröffentlichte ältere Patentanmeldung 10 2004 011 211.8 der Anmelderin, angemeldet am 04.03.2004, beschreibt ein Verfahren zur Herstellung von Bier mit gegenüber einem Ausgangsbier verändertem Restextraktgehalt und/oder verändertem Alkoholgehalt, bei dem man ein Filtrat mit reduziertem Restextraktgehalt durch Nanofiltration gewinnen kann, wobei man den Alkoholgehalt des Biers bei dieser Methode etwa gleich halten kann. In einem solchen Verfahren ist es beispielsweise möglich, durch den verringerten Restextraktgehalt bei Verwendung des Filtrats (Permeats) eine Art Diätbier zu gewinnen, welches einen reduzierten Kaloriengehalt aufweist, im Alkoholgehalt jedoch gegenüber einem herkömmlichen Bier nicht oder nur unwesentlich reduziert ist. Dieses in der älteren Anmeldung der Anmelderin beschriebene Verfahren befasst sich jedoch nur mit der Veränderung des Restextraktgehalts beziehungsweise Alkoholgehalts.

Aus der CH 682 636 A5 ist ein Verfahren zum selektiven Entfernen von Zucker aus Getränken bekannt. Zucker oder andere nicht flüchtige Stoffe können aus einem alkoholischen Getränk entfernt werden, indem zunächst der Zucker in einer Membrantrennanlage durch eine entsprechende Wahl der Membran abgetrennt wird. Das den abgetrennten Zucker enthaltende Permeat wird dann in einen Ftetentat-Umwälzkreislauf einer Nanofiltration eingeführt. Durch eine Einleitung einer Waschflüssigkeit in den Retentat-Umvvälzkreislauf wird der Zucker ausgewaschen und als Zucker angereicherte Lösung abgeführt, während das Permeat der Nanofiltration zur Permeatseite der Membrantrennanlage wieder zugeführt wird

Aufgabe der vorliegenden Erfindung ist es, ein Verfahren zur Herstellung von Bier zur Verfügung zu stellen, welches es ermöglicht, gezielt bestimmte Inhaltsstoffe anzureichern oder zu verringern, um so unter Einhaltung des Reinheitsgebots Produktbiere mit vom Ausgangsbier abweichender Zusammensetzung in großer Variationsbreite herzustellen.

Die Lösung dieser Aufgabe liefert ein erfindungsgemäßes Verfahren zur Herstellung von Bier der eingangs genannten Gattung mit den kennzeichnenden Merkmalen des Hauptanspruchs. Die Unteransprüche betreffen vorteilhafte Weiterbildungen der Erfindung. Erfindungsgemäß ist vorgesehen, man das Retentat der Ultrafiltration zur Einstellung des Restextraktgehalts des Permeats der Nanofiltration mit dem Permeat der Nanofiltration verschneidet, um das Schaumverhalten und die Vollmundigkeit dieses Getränks zu verbessern, und/oder das Retentat der Ultrafiltration zur Schaumverbesserung des Retentats der Nanofiltration mit dem Retentat der Nanofiltration verschneidet, das als alkoholreduziertes Bier mit unterschiedlichen Restextraktgehalten verwendet werden kann.

Das Verfahren umfasst also mindestens einen Verfahrensschritt, in dem die Anreicherung und Reduzierung des Gehalts an dem mindestens einen Inhaltsstoff erfolgt, der eine Ultrafiltration umfasst. Dabei kann man die Ultrafiltration an einem beliebigen Ausgangsbier vornehmen. Man kann auch von einem Ausgangsbier ausgehen, welches bereits zuvor eine Nanofiltration durchlaufen hat. Eine solche vorherige Nanofiltration ist aber keineswegs zwingend erforderlich. Eine andere mögliche Verfahrensvariante sieht vor, dass man mindestens zwei aufeinanderfolgende Ultrafiltrationen vornimmt, insbesondere zwei Ultrafiltrationen mit unterschiedlicher Porengröße.

Man kann gemäß einer Variante, die allerdings nicht Gegenstand der Erfindung ist, das Permeat der Ultrafiltration für die Herstellung eines Produktbiers verwenden. Beispielsweise kann man dieses bei einer Ultrafiltration gewonnene Permeat mit einem Permeat eines Biers verschneiden, welches zuvor eine Nanofiltration durchlaufen hat. Man kann alternativ oder zusätzlich dazu auch das Retentat einer Ultrafiltration verwenden, um es mit anderen Ausgangsbieren zu verschneiden, um daraus in den Inhaltsstoffen veränderte Produktbiere zu gewinnen. Dabei kann man so vorgehen, dass man ein Permeat einer Ultrafiltration einem Ausgangsbier oder einem anderen Permeat zudosiert, um daraus ein Produktbier zu gewinnen, welches dann beispielsweise zu einer Abfüllanlage geleitet wird. Das bei der Ultrafiltration gewonnene Retentat kann man zunächst beispielsweise einem Sammeltank zuführen, um es dann gegebenenfalls zu einem späteren Zeitpunkt beispielsweise für einen Verschnitt mit einem anderen Ausgangsbier zu verwenden. Wenn man eine mehrstufige Ultrafiltration vornimmt, kann man das in jeder Stufe gewonnene Retentat oder Permeat jeweils separat gewinnen und beispielsweise in einem Behälter wie einem Sammeltank oder dergleichen zwischenlagern. Man kann in gleicher Weise das Retentat der Nanofiltration gewinnen und einem separaten Behälter zuführen, während man das Permeat der Nanofiltration dann mit dem Retentat der Ultrafiltration oder einer Ultrafiltrationsstufe verschneidet und daraus das Produktbier gewinnt.

Es besteht die Möglichkeit, jeweils ein Retentat aus einer Filtrationsstufe oder ein Permeat in Teilströme aufzuteilen, so dass man nur einen Teilstrom für die Gewinnung eines Produktbiers verwendet und einen weiteren Teilstrom entweder in eine der anderen Filtrationsstufen zurückführt oder aus der Anlage entnimmt, um es einem separaten Behälter zuzuführen.

Es ist möglich, dass man gezielt definierte Inhaltsstoffe oder Stoffgruppen des Ausgangsbiers mit definierten Molekulargewichten oder Molekulargewichtsbereichen durch Filtration in dem Bier reduziert, gegebenenfalls vollständig entfernt oder anreichert, um so ein Produktbier zu gewinnen, welches diese Inhaltsstoffe in einer definierten Menge oder einem definierten Mengenbereich enthält. Als Inhaltsstoffe, die reduziert oder angereichert oder auch völlig entfernt werden, kommen beispielsweise Eiweiße oder Eiweißfraktionen, Zucker oder Polysaccharide, Gerbstoffe oder Salze in Betracht. Wenn man beispielsweise zwei oder mehr aufeinanderfolgende Ultrafiltrationsstufen verwendet, bei denen man Filtrationseinrichtungen mit unterschiedlichen Porengrößen einsetzt, dann kann man erreichen, dass in dem Produktstrom Inhaltsstoffe oder Stoffgruppen ausschließlich enthalten oder in reduzierter Menge vorhanden sind, die sowohl ein maximales Molekulargewicht als auch ein minimales Molekulargewicht einhalten. Beispielsweise kann man zwei aufeinanderfolgende Ultrafiltrationen mit unterschiedlicher Porengröße durchführen und dabei zunächst eine Ultrafiltration mit größerer Porengröße vornehmen, dann das Permeat aus dieser Ultrafiltration einer Ultrafiltration mit geringerer Porengröße unterziehen und das aus der zweiten Ultrafiltration gewonnene Retentat zur Herstellung eines Produktbiers verwenden.

Zu einem ähnlichen Ergebnis kann man gelangen, wenn man mindestens zwei aufeinanderfolgende Ultrafiltrationen mit unterschiedlicher Porengröße durchführt, wobei man zunächst eine Ultrafiltration mit kleinerer Porengröße vornimmt, das dabei gewonnene Retentat anschließend einer Ultrafiltration mit größerer Porengröße zuführt und das dann dabei gewonnene Permeat zur Herstellung eines Produktbiers verwendet. Dabei handelt es sich allerdings nicht um eine Ausführungsform der vorliegenden Erfindung.

Bei dem erfindungsgemäßen Verfahren zur Herstellung von Bier ergeben sich eine Vielzahl von Möglichkeiten zur Gewinnung von Produktbieren, die im Vergleich zum Ausgangsbier ein verändertes Spektrum an Inhaltsstoffen aufweisen. Da das Verfahren eine Nanofiltration umfasst, enthält das Permeat im Vergleich zum Ausgangsbier ein Alkohol-Wassergemisch mit niedermolekularen Aromastoffen, wie z.B. Estern, Aminosäuren und einwertigen Salzen. Das Retentat der Nanofiltration ergibt ein Bier, das im Vergleich zum Eingangsbier einen aufkonzentrierten Restextrakt mit einem höheren Gehalt an Kohlenhydraten, Eiweißen, zwei- und höherwertigen Salzen etc., dabei aber einen ähnlichen Anteil an Alkoholen, Aminosäuren, Aromastoffen, einwertigen Salzen etc. aufweist. Man kann das Permeat der Nanofiltration u.a. als Maltbase, als Alkoholfraktion von Mischgetränken, verwenden. In weiteren Beispielen, die ebenfalls nicht Gegenstand der Erfindung sind, kann man das Permeat mit Retentat verschneiden zu Bieren mit unterschiedlichen Restextraktgehalten, das Permeat mit Retentat und Wasser verschneiden zu Bieren mit unterschiedlichen Restextraktgehalten und Alkoholgehalten oder man kann beispielsweise Biere mit reduziertem einwertigen Salzgehalt, zum Beispiel an NaCl verwenden, wobei man das Retentat pur oder mit Wasser verschnitten einsetzen kann.

Da das erfindungsgemäße Verfahren eine Ultrafiltration umfasst, ergibt das Permeat im Vergleich zum Ausgangsbier ein Bier mit reduziertem Eiweißgehalt, mit einem höheren Anteil an niedermolekularen Eiweißstoffen oder mit einem höheren Anteil an niedermolekularen Zuckern. Das Retentat ergibt im Vergleich zum Ausgangsbier ein Bier mit einem erhöhten Anteil an hydrophoben Eiweißstoffen, ein Bier mit einem erhöhten Anteil an höhermolekularen Eiweißstoffen, ein Bier mit einer Aufkonzentrierung der Farbstoffe oder ein Bier mit einem höheren Anteil an höhermolekularen Zuckern. Verwendungsmöglichkeiten ergeben sich zum Beispiel für das Retentat als Zusatz zu verschiedenen Bieren zur Schaumverbesserung, als Zusatz zu verschiedenen Bieren zur Erhöhung der Bierfarbe.

Da das erfindungsgemäße Verfahren eine Kombination aus einem Schritt umfasst, in dem eine Nanofiltration erfolgt und einem Schritt, in dem eine Ultrafiltration erfolgt, ergeben sich entsprechend komplexere Einsatzmöglichkeiten. Beispielsweise kann das Retentat der Ultrafiltration als Teilmenge zum Retentat der Nanofiltration gegeben werden.

Gemäß der vorliegenden Erfindung kann das Retentat der Ultrafiltration zur Einstellung des Restextraktgehaltes des Nanofilterpermeats verwendet werden, um Schaumverhalten und Vollmundigkeit dieses Getränks zu verbessern. Gemäß der vorliegenden Erfindung wird das Retentat der Ultrafiltration zur Schaumverbesserung des Nanofilterretentats verwendet, das als alkoholreduziertes Bier mit unterschiedlichen Restextraktgehalten(z.B. Verdünnen mit Wasser) verwendet werden kann.

Wenn das Verfahren eine Ultrafiltration und eine Nanofiltration umfasst, wobei aber zunächst die Ultrafiltration erfolgt und dann die Nanofiltration, dann kann das Retentat der Ultrafiltration als Teilmenge oder insgesamt nanofiltriert werden. Dies bietet u.a. die Möglichkeit der Herstellung von Bieren mit verschiedenen Restextrakt-, Alkohol- und Kaloriengehalten. Man kann das Retentat der Ultrafiltration dann zur weiteren Filtration über Nanofilter einsetzen und dies u.a. zur Herstellung von Bieren mit verschiedenen Restextrakt-, Alkohol- und Kaloriengehalten verwenden. Man kann das Retentat der Ultrafiltration als Teilmenge zum Permeat der Nanofiltration verwenden, wobei das Nanofilterpermeat z.B. dazu dienen kann, um Schaumverhalten und Vollmundigkeit eines Getränks zu verbessern.

Nachfolgend wird die Erfindung anhand von Ausführungsbeispielen unter Bezugnahme auf die beiliegenden Zeichnungen näher erläutert. Dabei zeigen
- Fig. 1: ein Schema zur Erläuterung der Anwendung eines erfindungsgemäßen Verfahrens;
- Fig. 1a: ein ähnliches Schema betreffend eine Variante des in Fig. 1 dargestellten Verfahrens;
- Fig. 2: ein weiteres Schema betreffend ein alternatives Verfahren gemäß der vorliegenden Erfindung;
- Fig. 2a: ein weiteres Verfahrensschema betreffend eine ähnliche Verfahrensweise wie zuvor unter Bezugnahme auf Fig. 2 beschrieben,
- Fig. 3: ein weiteres Verfahrensschema betreffend ein mögliches alternatives Verfahren gemäß der vorliegenden Erfindung;
- Fig. 3a: ein weiteres Verfahrensschema betreffend eine Variante des in Fig. 3 gezeigten Verfahrens,
- Fig. 4: ein weiteres Verfahrensschema betreffend eine alternative Verfahrensvariante;
- Fig. 5: ein weiteres Verfahrensschema betreffend eine alternative Verfahrensvariante.

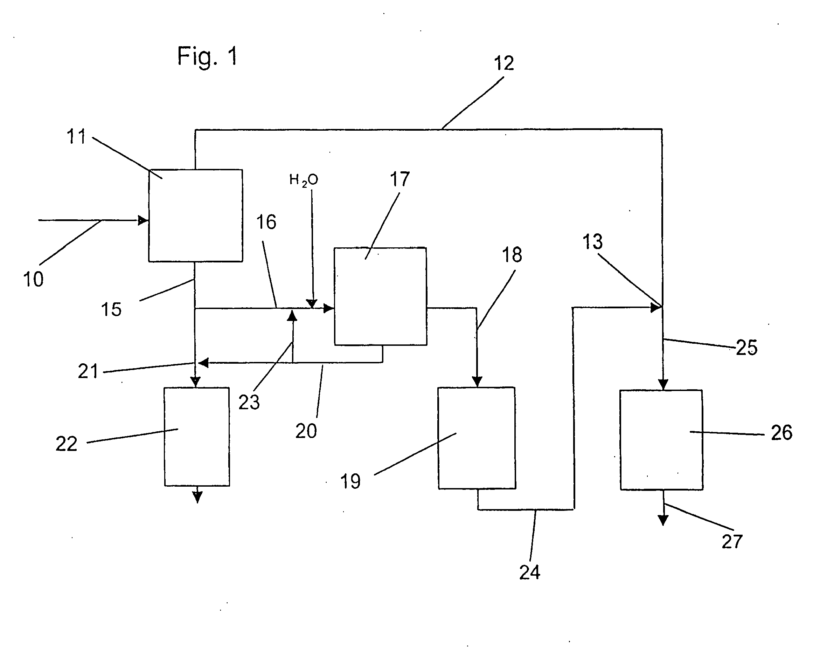

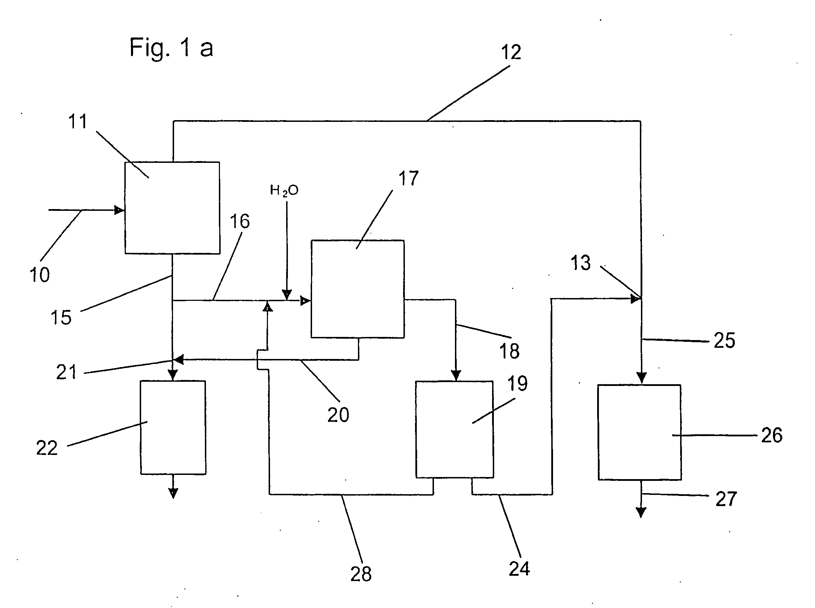

Zunächst wird auf Fig. 1 Bezug genommen. Fig. 1 zeigt in schematisch vereinfachter Darstellung ein mögliches Verfahren zur Herstellung von Bier, das in dieser Form allerdings nicht Teil der vorliegenden Erfindung ist, sondern lediglich das Verständnis der Erfindung erleichtern soll. In diesem Ausführungsbeispiel wird ein Ausgangsbier 10 zunächst einer Nanofiltration 1 unterzogen, bei der man Inhaltsstoffe entfernen kann, die eine kleinere Partikelgröße aufweisen als zum Beispiel bei der Ultrafiltration. In der Regel liegen die Molekulargewichte der bei der Nanofiltration herausgefilterten Partikel bei etwa 5 bis 10 kDALTON. Durch eine solche Nanofiltration kann man zum Beispiel aus einem Ausgangsbier ein Permeat mit einem verringerten Gehalt an Restextrakt erhalten. Dieses Permeat wird in Fig. 1 über die Leitung 12 geleitet und an der Verzweigungsstelle 13 wird diesem ein weiteres Permeat zugesetzt, welches durch eine Ultrafiltration aus dem Retentat der Nanofiltration gewonnen wurde, wie nachfolgend noch näher erläutert wird.

Das Retentat verlässt die Nanofiltrationseinrichtung 11 über die Leitung 15 und wird dann über die Leitung 16 zu einer Ultrafiltrationseinrichtung 17 geleitet. Da das in die Leitung 16 eingespeiste Retentat der Nanofiltration eine Aufkonzentrierung erfährt, kann diesem Wasser zugesetzt werden, bevor es in die Ultrafiltrationseinrichtung 17 gelangt. Bei dieser Ultrafiltration kann beispielsweise eine Porengröße verwendet werden, die nur Partikel mit einem Molekulargewicht bis etwa 100 kD durchlässt. Das dabei gewonnene Permeat wird über die Leitung 18 in einen Dosagetank 19 eingespeist. Das Retentat der Ultrafiltration 17 gelangt hingegen über die Leitung 20 und die Abzweigung 21 zurück in die Leitung 15 und kann dann gegebenenfalls mit einem Teil des Retentats aus der Nanofiltrationseinrichtung 11 in den Tank 22 gegeben werden, wo dieses Retentat solange aufbewahrt werden kann, bis man es zum Beispiel zum Verschneiden mit anderen Bieren benötigt. Das bei der Ultrafiltration 17 gewonnene Retentat, welches die Ultrafiltrationseinrichtung über die Leitung 20 verlässt, kann teilweise bzw. ganz in die Leitung 16 zurückgeführt und dem ersten Retentat aus der Nanofiltration 11 zugegeben werden. Wie man in Fig. 1 erkennt, ist dazu eine Zweigleitung 23 vorgesehen, so dass ein Teilstrom des Retentats aus der Leitung 20 über die Zweigleitung 23 der Leitung 16 zugeführt werden kann, so dass es erneut in die Ultrafiltrationseinrichtung 17 gelangt.

Das Permeat der Ultrafiltration 17 gelangt aus dem Dosagetank 19 über die Leitung 24 zu dem Abzweig 13, wo die Dosage erfolgt und dieses Permeat der Ultrafiltration dem aus der Leitung 12 kommenden Permeat der Nanofiltration zugegeben wird oder auch einem anderen bis dahin unveränderten Ausgangsbier. Die Dosage erfolgt in einer solchen Menge, dass ein Produktbier erhalten wird, welches die bei der Ultrafiltration 17 zurückgehaltenen Inhaltsstoffe in reduzierter Menge enthält. Dieses Produktbier gelangt über die Leitung 25 in einen Getränketank 26 und von dort schließlich über die Leitung 27 zu beispielsweise einer Abfüllanlage für das Produktbier.

Nachfolgend wird unter Bezugnahme auf Fig. 1a und das dort gezeigte Schema ein ähnliches Verfahren gemäß einer etwas abweichenden beispielhaften Ausführungsvariante der Erfindung beschrieben. Auch hier erfolgt zunächst eine Nanofiltration 11, der ein Ausgangsbier über die Leitung 10 zugeführt wird. Die Nanofiltrationseinrichtung 11 verlässt ein erstes Permeat über die Leitung 12 und ein erstes Retantat über die Leitung 15, von dem zumindest ein Teilstrom über die Leitung 16 der Ultrafiltrationseinrichtung 17 zugeführt wird. Auch hier kann der Leitung 16 Wasser zugesetzt werden. Die Ultrafiltrationseinrichtung 17 verwendet in diesem Fall vorzugsweise eine kleinporigere Trenneinrichtung als in dem zuvor bezugnehmend auf Fig. 1 beschriebenen Verfahren, wobei beispielsweise in Fig. 1a die Ultrafiltrationseinrichtung 17 eine Porengröße von 30 kD aufweist. Bei der Variante gemäß Fig. 1 a wird nun das Permeat der Ultrafiltration über die Leitung 20 zu dem Abzweig 21 und somit in die Leitung 15 geleitet und gelangt dann schließlich in den Tank 22, um später zum Verschneiden mit anderen Bieren benutzt zu werden. Anders als bei der Variante nach Fig. 1 wird also hier das Permeat der Ultrafiltration aus der Anlage abgeleitet, während das Retentat der Ultrafiltration über die Leitung 18 in den Dosagetank 19 gelangt. Aus dem Dosagetank 19 kann über die Rückführungsleitung 28 ein Teil des Retentats der Ultrafiltration in die Leitung 16 zurückgeführt werden, um somit erneut die Ultrafiltrationseinrichtung 17 zu durchlaufen. Ein weiterer Teilstrom des Retentats gelangt hingegen aus dem Dosagetank 19 über die Leitung 24 zur Dosage und wird an dem Abzweig 13 der Leitung 12 zugegeben, in der das Permeat der Nanofiltration 11 strömt. Auch hier gelangt dann das Gemisch aus dem Permeat der Nanofiltration und dem Teilstrom des Retentats der Ultrafiltration über die Leitung 25 in den Getränketank 26 und anschließend zur Abfüllung. Dadurch dass bei der Variante gemäß Fig. 1a in der Ultrafiltrationseinrichtung 17 eine kleinere Porengröße verwendet wird, ist in diesem Fall das Retentat mit Partikeln größerer Porengröße angereichert und für die Herstellung des hier gewünschten Produktbiers interessant.

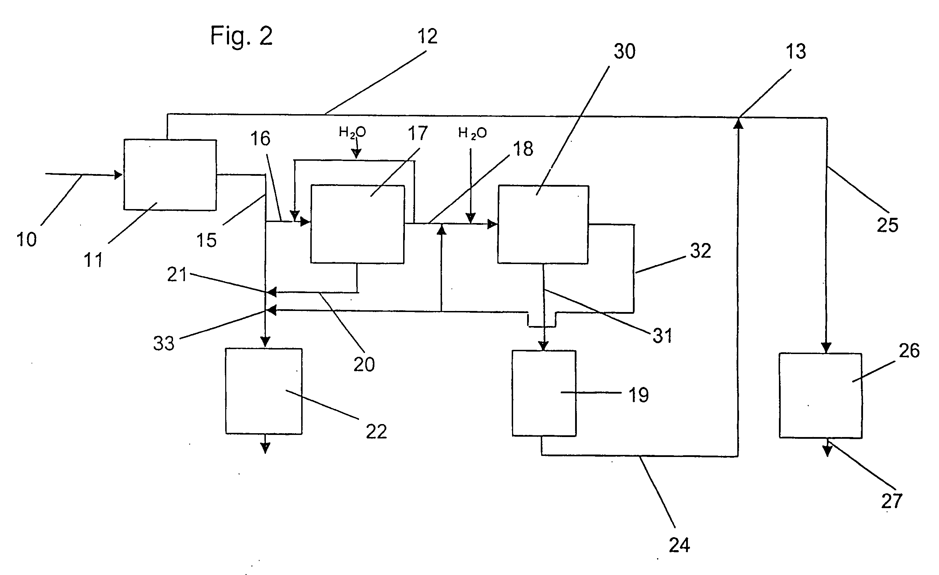

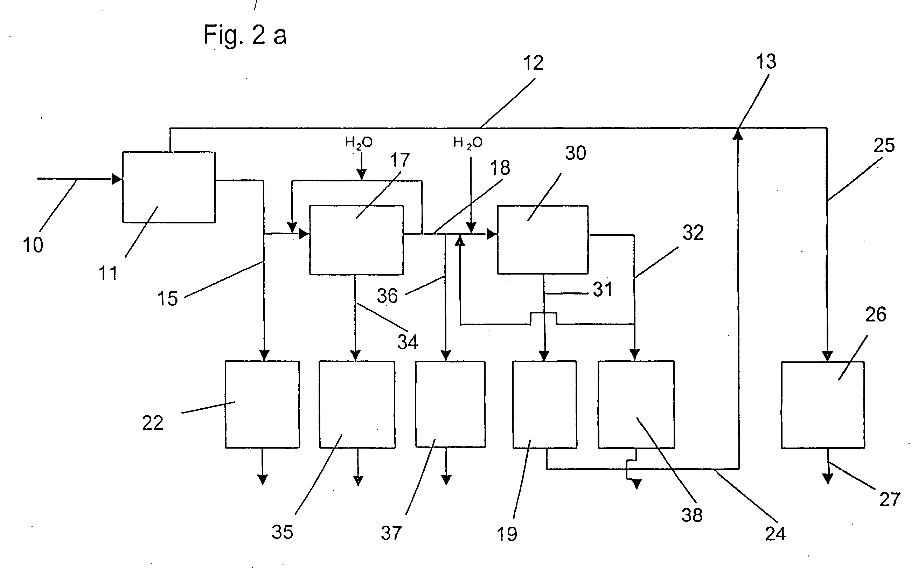

Nachfolgend wird unter Bezugnahme auf Fig. 2 ein weiteres Beispiel eines Verfahrens zur Herstellung von Bier beschrieben, das ebenfalls kein Ausführungsbeispiel der vorliegenden Erfindung ist, sondern lediglich das Verständnis der Erfindung erleichtern soll. Bei dieser Verfahrensvariante ist eine zweistufige Ultrafiltration vorgesehen. Es gelangt zunächst ein Ausgangsbier über die Leitung 10 in eine Nanofiltrationseinrichtung 11, die beispielsweise eine vergleichsweise feine Porengröße kleiner 5 kD durchlässt. Das Permeat der Nanofiltration 11 wird über die Leitung 12 abgeführt, während das Retentat über die Leitung 15 und die von dieser abzweigenden Leitung 15 der ersten Filtrationsstufe 17 einer Ultrafiltrationseinrichtung zugeführt wird. Vor Eintritt in die Ultrafiltrationseinrichtung 17 kann auch hier Wasser zudosiert werden, da das Retentat zuvor eine gewisse Aufkonzentrierung erfahren hat. In der ersten Ultrafiltrationsstufe wird hier eine Filtereinrichtung mit einer kleineren Porengröße von zum Beispiel 30 kD verwendet und das Permeat der ersten Ultrafiltrationseinrichtung 17 wird ähnlich wie bei dem Verfahren gemäß Fig. 1a über die Leitung 20 und den Abzweig 21 in die Leitung 15 zurückgeleitet. Das Retentat der ersten Ultrafiltrationseinrichtung wird über die Leitung 18 einer zweiten nachgeschalteten Ultrafiltrationseinrichtung 30 zugeführt, bei der hier Porengrößen verwendet werden, die größere Partikel durchlassen, beispielsweise in der Größenordnung von bis zu 60 kD. Da das Retentat aus der ersten Ultrafiltrationseinrichtung 17 eine gewisse Aufkonzentrierung erfahren hat, kann der Leitung 18 erneut Wasser zugesetzt werden. Das Retentat der ersten Ultrafiltrationseinrichtung 17 enthielt weitgehend Partikel mit einer Größe von mehr als 30 kD, folglich enthält das Permeat der zweiten Ultrafiltrationseinrichtung 30, welches diese über die Leitung 31 verlässt überwiegend Partikel mit einem Molekulargewicht zwischen 30 kD und 60 kD. Dieses Permeat gelangt dann über die Leitung 31 in den Dosagetank 19 und von dort über die Dosageleitung 24 und den Abzweig 13 gelangt dieses Permeat der zweiten Ultrafiltrationseinrichtung zu der Leitung 12, wo es mit dem Permeat der Nanofiltrationseinrichtung 11 vermischt wird, in einem einstellbaren Verhältnis zur Herstellung eines gewünschten Produktbiers. Das Produktbier wird dann über die Leitung 25 dem Getränketank 26 zugeleitet und gelangt von dort über die Leitung 27 zu einer Abfüllanlage.

Das Retentat der zweiten Ultrafiltrationseinrichtung 30 gelangt hingegen über die Leitung 32 und den Abzweig 33 in die Leitung 15, die zu dem Tank 22 führt. Dieser Tank ist in dem Ausführungsbeispiel als Sammeltank ausgebildet und nimmt einen Teilstrom des Retentats der Nanofiltrationseinrichtung 11 auf, einen Teilstrom des Permeats aus der ersten Ultrafiltrationseinrichtung 17, weiches über die Leitung 20 zu dem Abzweig 21 gelangt sowie das Retentat aus der zweiten Ultrafiltrationseinrichtung, welches über die Leitung 32 zu dem Abzweig 33 gelangt. Auch hier kann das in dem Sammeltank 22 aufgefangene Bier zum Verschnitt mit anderen Bieren verwendet werden.

Nachfolgend wird unter Bezugnahme auf Fig. 2a ein ähnliches Filtrationsverfahren wie in dem zuvor anhand von Fig. 2 beschriebenen Ausführungsbeispiel erläutert, bei dem jedoch vorgesehen ist, dass verschiedene Fraktionen in getrennten Tanks aufgefangen werden. Dieses Verfahren ist ebenfalls kein Ausführungsbeispiel der vorliegenden Erfindung ist, sondern soll lediglich das Verständnis der Erfindung erleichtern. Auch hier ist eine Nanofiltrationseinrichtung 11 und zwei Ultrafiltrationseinrichtungen 17, 30 mit unterschiedlichen Porengrößen vorhanden. Da das Verfahrensschema gemäß Fig. 2a soweit es die Filtrationseinrichtungen betrifft sowie die Leitungsführungen demjenigen gemäß Fig. 2 ähnelt, werden hier im Detail nur die Abweichungen erläutert. Wie man sieht wird das Retentat aus der Nanofiltrationseinrichtung 11 über die Leitung 15 einem ersten Sammeltank 22 zugeführt, aus dem es entnommen werden kann, um dieses Retentat zum Beispiel mit anderen Bieren zu verschneiden. Das Permeat aus der ersten Ultrafiltrationseinrichtung 17 wird über eine Leitung 34 in einem separaten Sammeltank 35 aufgefangen. Das Retentat der ersten Ultrafiltrationseinrichtung 17 gelangt über die Leitung 18 in die zweite Ultrafiltrationsstufe 30. Ein Teilstrom des Retentats aus der ersten Filtrationsstufe 17 wird hier über die von der Leitung 18 abzweigende Leitung 36 einem separaten Tank 37 zugeführt, wo dieses Retentat getrennt aufgefangen werden kann, so dass es separat zum Verschnitt mit anderen Bieren verwendet werden kann. Das Retentat aus der zweiten Ultrafiltrationseinrichtung 30 gelangt über die Leitung 32 in einen weiteren Sammeltank 38 und kann ebenfalls separat zum Verschnitt mit anderen Bieren verwendet werden. Das Permeat aus der zweiten Ultrafiltrationseinrichtung 30 wird für den Dosagetank 19 verwendet und ähnlich wie bei der Ausführungsvariante gemäß Fig. 2 über die Dosageleitung 24 und den Abzweig 13 dem Produktstrom des Permeats aus der Nanofiltrationseinrichtung 11 zugemischt. Bei dem Verfahren gemäß der Variante von Fig. 2 a können also neben dem Permeat der Ultrafiltration, welches unmittelbar zur Herstellung eines Produktbiers dient, vier weitere Fraktionen in separaten Sammeltanks 22, 35, 37, 38 aufgefangen werden, nämlich das Retentat aus der Nanofiltration, das Permeat aus der ersten Ultrafiltrationseinrichtung 17, das Retentat aus der ersten Ultrafiltrationseinrichtung und das Retentat aus der zweiten Ultrafiltrationseinrichtung 30.

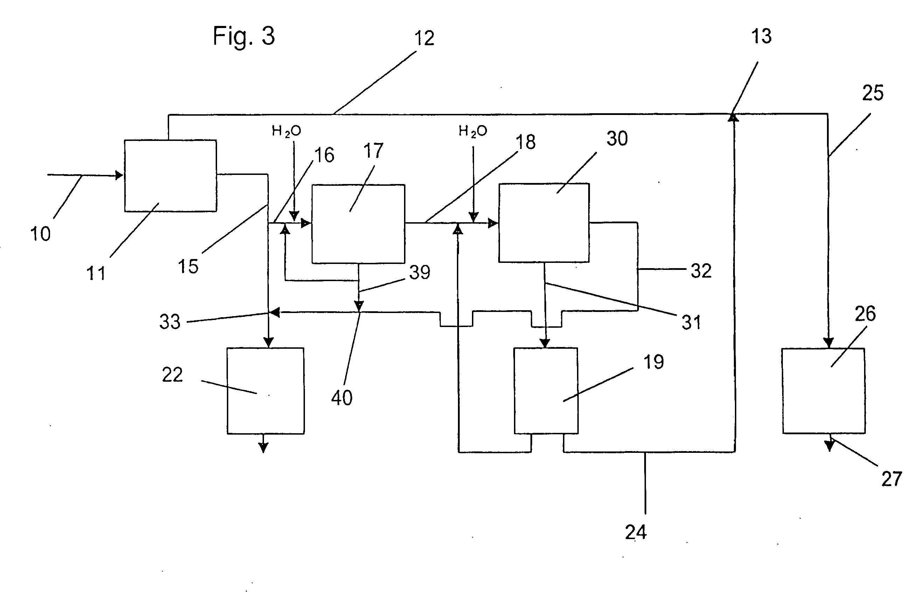

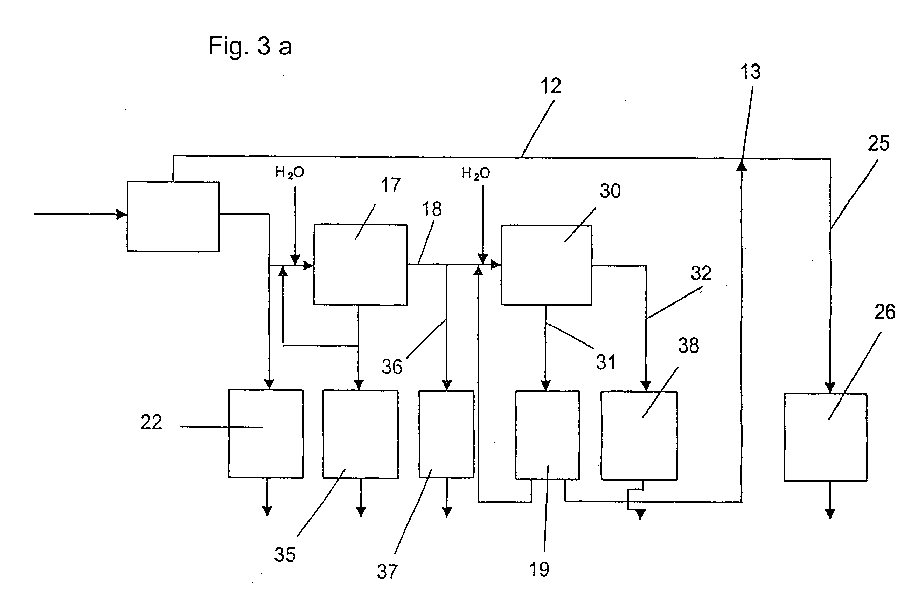

Nachfolgend wird unter Bezugnahme auf Fig. 3 eine weitere Ausführungsvariante des erfindungsgemäßen Verfahrens näher erläutert. Auch bei dieser Verfahrensvariante wird eine zweistufige Ultrafiltration vorgenommen, wobei jedoch im Unterschied zu der Variante gemäß Fig. 2 in der ersten Filtrationseinrichtung eine größere Porengröße verwendet wird und in der zweiten nachgeschalteten Ultrafiltrationseinrichtung dann eine kleinere Porengröße eingesetzt wird. Im Übrigen ist das Verfahrensschema sehr ähnlich demjenigen von Fig. 2. Die erste Filtrationseinrichtung 17 in Fig. 3 hat beispielsweise eine Porengröße von 60 kD. Der Ultrafiltrationseinrichtung 17 ist eine Nanofiltrationseinrichtung 11 vorgeschaltet, in der beispielsweise Partikel mit einer Größe von weniger 5 kD durchgelassen werden, die als Permeat über die Leitung 12 die Nanofiltration verlassen. Das aufkonzentrierte Retentat der Nanofiltrationseinrichtung 11 wird auch hier in zwei Teilströme aufgeteilt, von denen einer über die Leitung 16 zur ersten Ultrafiltrationseinrichtung 17 gelangt, während der andere über die Leitung 15 dem Sammeltank 22 zugeführt wird. Anders als bei der Variante gemäß Fig. 2 wird jedoch bei dem Schema gemäß Fig. 3 das Permeat der Ultrafiltrationseinrichtung 17 über die Leitung 18 in die zweite Ultrafiltrationseinrichtung 30 eingespeist. Die zweite nachgeschaltete Ultrafiltrationseinrichtung 30 verwendet feinere Poren und lässt nur Partikel mit einer Größe von zum Beispiel weniger 30 kD durch. Hier verlässt das Permeat die zweite Ultrafiltrationseinrichtung 30 über die Leitung 32 und kann über den Abzweig 33 in die Leitung 15 rückgeführt werden. Das Retentat verlässt hingegen die Ultrafiltrationseinrichtung 30 über die Leitung 31 und wird dem Dosagetank 19 zugeführt. In diesem Fall enthält das Retentat der zweiten Ultrafiltrationsstufe Partikel mit einer Teilchengröße von weniger als 60 kD aus dem Permeat der ersten Filtrationseinrichtung 17 (Leitung 18) und gleichzeitig Partikel mit einer Größe von mehr als 30 kD, da die Partikel mit einer Größe von weniger als 30 kD in dem Permeat der zweiten Ultrafiltrationseinrichtung 30 (Leitung 32) enthalten sind. Auf diese Weise erhält man ein Retentat in der Leitung 31, welches eine nach oben und nach unten limitierte Partikelgröße umfasst und im Ergebnis dem Permeat aus der Ultrafiltrationseinrichtung 30 in Fig. 2 entspricht. Dieses Retentat aus der doppelten Ultrafiltration gelangt in dem Schema gemäß Fig. 3 aus dem Dosagetank 19 über die Dosageleitung 24 und den Abzweig 13 in die Leitung 25 und wird dem Getränketank 26 zugeführt und bildet das gewünschte Produktbier, nachdem es mit dem aus der Leitung 12 kommenden Permeat der Nanofiltration vermischt worden ist, und wird einer Abfüllung 27 zugeleitet. Dem Sammeltank 22 wird bei dem Schema gemäß Fig. 3 über die Leitung 32 das Permeat der zweiten Ultrafiltrationseinrichtung 30 und über die Leitung 39 und den Abzweig 40 das Retentat aus der ersten Ultrafiltrationseinrichtung 17 zugeführt. Das in dem Sammeltank 22 enthaltene Produkt kann wiederum zum Verschnitt mit anderen Ausgangsbieren verwendet werden.

Fig. 3a zeigt ein weiteres Verfahrensschema, bei dem in ähnlicher Weise gearbeitet wird wie bei dem Ausführungsbeispiel gemäß Fig. 3, wobei jedoch die verschiedenen Retentat- beziehungsweise Permeatfraktionen in separaten Sammeltanks aufgefangen werden. Dabei ist hier ein Sammeltank 22 vorgesehen, in welchem das Retentat aus der Nanofiltrationseinrichtung 11 aufgefangen wird. Weiterhin ein Sammeltank 35, der das Retentat aus der ersten Ultrafiltrationsstufe 17 aufnimmt. Ein Sammeltank 37 nimmt einen Teilstrom des Permeats aus der ersten Ultrafiltrationseinrichtung 17 auf. Bei dieser Verfahrensvariante wird ein Permeat von der ersten Ultrafiltrationsstufe 17 in die zweite Ultrafiltrationsstufe 30 geleitet, da in der ersten Ultrafiltrationsstufe 17 zunächst eine größere Porengröße verwendet wird. Ein Teilstrom dieses Permeats wird aus der Leitung 18 abgezweigt und über die Leitung 36 in den Sammeltank 37 geleitet. Das übrige Permeat der ersten Ultrafiltrationsstufe gelangt in die zweite Ultrafiltrationseinrichtung 30. Das Permeat aus dieser zweiten Ultrafiltrationseinrichtung 30 wird über die Leitung 32 in einen weiteren Sammeltank 38 geleitet. Das Retentat aus der zweiten Ultrafiltrationseinrichtung 30 gelangt hingegen über die Leitung 31 in den Dosagetank 19, und wird von dort über den Abzweig 13 dem Permeat aus der Nanofiltration, welches über die Leitung 12 gelangt, zugemischt und schließlich über die Leitung 25 dem Getränketank 26 zugeleitet. Der Vorteil dieser Verfahrensvariante gegenüber der Variante gemäß Fig. 3 besteht somit darin, dass in den verschiedenen Sammeltanks 22, 35, 37, 38 die während des Verfahrens anfallenden Retentate und Permeate aus den verschiedenen Filtrationsstufen getrennt aufgefangen werden und somit jeweils zum Verschnitt mit anderen Bieren verwendet werden können.

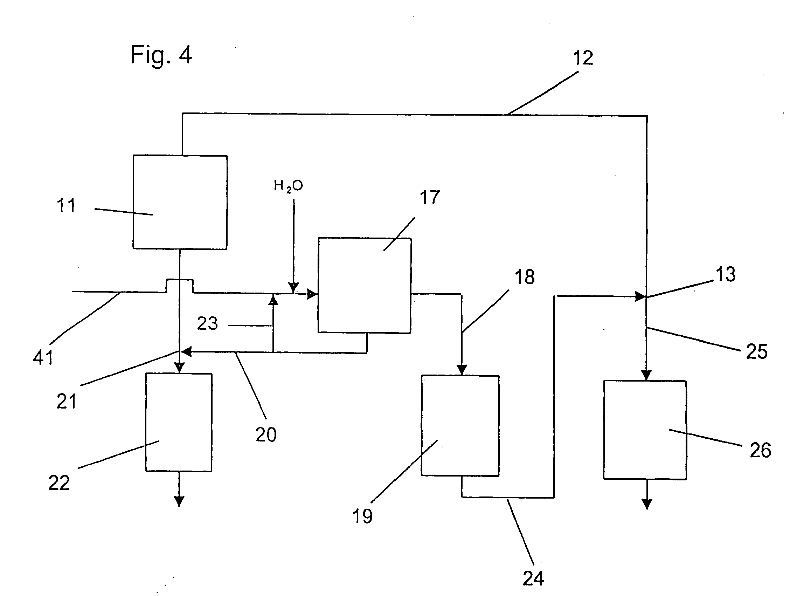

Nachfolgend wird unter Bezugnahme auf Fig. 4 eine weitere alternative Verfahrensvariante näher beschrieben. Diese Variante umfasst eine Vorgehensweise, die derjenigen gemäß dem Ausführungsbeispiel von Fig. 1 ähnlich ist, Wie man sieht, sind die jeweiligen Verfahrensschemata sehr ähnlich. Fig. 4 verdeutlicht jedoch, dass man in dem erfindungsgemäßen Verfahren auch statt des Retentats einer Nanofiltration ein beliebiges anderes Bier der Ultrafiltration unterwerfen kann, wobei man dann die einzelnen Fraktionen mit einem Permeat der Nanofiltration oder mit einem anderen Bier verschneiden kann.

Bei der Verfahrensvariante von Fig. 4, die ebenfalls kein Ausführungsbeispiel der Erfindung ist, sondern lediglich das Verständnis der Erfindung erleichtern soll, ist eine weitere Bierzuführleitung 41 vorgesehen, über die ein beliebiges Bier der Ultrafiltrationseinrichtung 17 zugeführt werden kann. Gleichzeitig kann man über die Nanofiltrationseinrichtung 11 und die Zugangsleitung 10 ein anderes Ausgangsbier auftrennen und das Permeat über die Leitung 12 dem Abzweigpunkt 13 zuführen, an dem die Dosage erfolgt. Das Retentat aus der Nanofiltration kann über die Leitung 15 in den Sammeltank 22 geleitet werden. Das Verschneiden des Permeats aus der Nanofiltrationseinrichtung 11 erfolgt dann mit dem Ultrafiltrat des über die Leitung 41 zugeführten anderen Biers. Dieses gelangt über die Leitung 41 in die Ultrafiltrationseinrichtung 17, wobei vorher eine Zugabe von Wasser erfolgen kann. Das Retentat dieser Ultrafiltrationseinrichtung 17 wird über die Leitung 20 teilweise zurückgeführt und über den Abzweigpunkt 21 gelangt dieses ebenfalls in den Sammeltank 22. Ein Teilstrom des Retentats aus der Ultrafiltration kann über die Leitung 23 erneut der Ultrafiltrationseinrichtung 17 zugeführt werden. Das Permeat aus der Ultrafiltration gelangt dann über die Leitung 18 zum Dosagetank 19 und von dort über die Leitung 24 zu dem Abzweigpunkt 13, wo die Dosage und somit das Vermischen mit dem Permeat aus der Nanofiltration erfolgt. Das dabei erhaltene Produktbier wird dem Getränketank 26 zugeführt und gelangt anschließend zur Abfüllung.

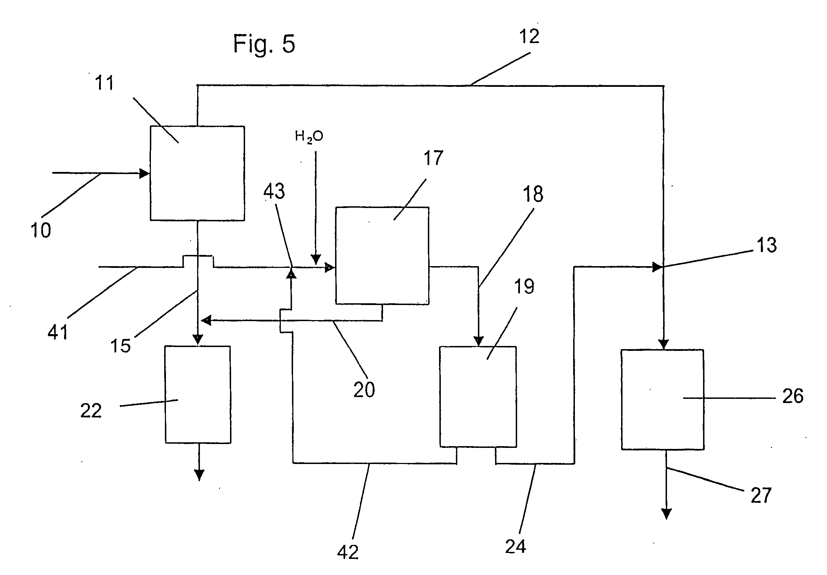

Nachfolgend wird unter Bezugnahme auf Fig. 5 eine weitere alternative Ausführungsvariante des erfindungsgemäßen Verfahrens erläutert. Das Verfahrensschema ist ähnlich demjenigen gemäß Fig. 4. Bei der Variante gemäß Fig. 5 gelangt auch ein erstes Bier über die Zugangsleitung 10 in die Nanofiltrationseinrichtung 11, wobei das Permeat über die Leitung 12 zum Abzweigpunkt 13 geführt wird. Das Retentat der Nanofiltrationseinrichtung 11 kann über die Leitung 15 dem Sammeltank 22 zugeführt werden, um später mit anderen Bieren verschnitten zu werden. Ein anderes beliebiges Bier, welches keiner Nanofiltration unterzogen wird, gelangt über die Zuführleitung 41 in die Ultrafiltrationseinrichtung 17. Bei der Variante nach Fig. 5 wird jedoch das Retentat über die Leitung 18 dem Dosagetank 19 zugeleitet, während das Permeat aus der Ultrafiltrationseinrichtung über die Leitung 20 in die Leitung 15 zurückgeführt und dem Sammeltank 22 zugeleitet wird. Bei dieser Variante wird das Retentat aus der Ultrafiltrationseinrichtung 17 für die Dosage verwendet, da bei der Ultrafiltration eine vergleichsweise kleine Porengröße von zum Beispiel 30 kD Durchlässigkeit verwendet wird, so dass das Retentat für die Dosage alle Partikel enthält die größer sind als 30 kD. Bei dieser Verfahrensvariante gehen vom Dosagetank 19 zwei Leitungen ab, einmal die Leitung 24 zum Abzweigpunkt 13, wo die Vermischung mit dem aus der Leitung 12 kommenden Permeat der Nanofiltrationseinrichtung 11 erfolgt. Ein Teilstrom des Retentats kann jedoch aus dem Dosagetank 19 über die Leitung 42 und den Abzweigpunkt 43 vor der Ultrafiltrationseinrichtung 17 in die Leitung 41 zurückgeführt werden und gelangt dann erneut in die Ultrafiltrationseinrichtung 17.

### Bezugszeichenliste

- 10.: Leitung für Ausgangsbier
- 11.: Nanofiltrationseinrichtung
- 12.: Leitung
- 13.: Verzweigungsstelle
- 14.:
- 15.: Leitung
- 16.: Leitung
- 17.: Ultrafiltationseinrichtung
- 18.: Leitung
- 19.: Dosagetank

- 20.: Leitung
- 21.: Abzweigung
- 22.: Tank
- 23.: Zweigleitung
- 24.: Leitung
- 25.: Leitung
- 26.: Getränketank
- 27.: Leitung
- 28.: Rückführungsleitung
- 29.:

- 30.: Ultrafiltrationseinrichtung
- 31.: Leitung
- 32.: Leitung
- 33.: Abzweig
- 34.: Leitung
- 35.: Sammeltank
- 36.: abzweigende Leitung
- 37.: Tank
- 38.: Sammeltank
- 39.: Leitung

- 40.: Abzweig
- 41.: Bierzuführleitung
- 42.: Leitung
- 43.: Abzweigpunkt

## Patentansprüche

1. Verfahren zur Herstellung von Bier, bei dem man ausgehend von einem Ausgangsbier die Konzentration bestimmter in diesem Ausgangsbier enthaltener Inhaltsstoffe anreichert und/oder verringert, um daraus ein Produktbier mit definierten Inhaltsstoffen zu gewinnen, wobei
- eine Nanofiltration mit festgelegter Porengröße vorgenommen wird, bei der ein Permeat, das ein Wasser-Alkoholgemisch mit niedermolekularen Aromastoffen enthält, und ein Retentat, das im Vergleich zum Ausgangsbier einen aufkonzentrierten Restextrakt mit einem höheren Gehalt an Kohlenhydraten, Eiweißen, zwei- und höherwertigen Salzen und einen ähnlichen Anteil an Alkoholen, Aminosäuren, Aromastoffen, einwertigen Salzen enthält, gewonnen werden, und anschließend das Permeat und/oder das Retentat der Nanofiltration zur Herstellung eines Produktbiers verwendet werden/wird,
- eine Ultrafiltration vorgenommen wird, bei der ein Permeat mit reduziertem Eiweißgehalt, mit einem höheren Anteil an niedermolekularen Eiweißstoffen oder mit einem höheren Anteil an niedermolekularen Zuckern und ein Retentat mit einem erhöhten Anteil an hydrophoben Eiweißstoffen gewonnen werden, **dadurch gekennzeichnet, dass** man das Retentat der Ultrafiltration zur Einstellung des Restextraktgehalts des Permeats der Nanofiltration mit dem Permeat der Nanofiltration verschneidet, um das Schaumverhalten und die Vollmundigkeit dieses Getränks zu verbessern, und/oder das Retentat der Ultrafiltration zur Schaumverbesserung des Retentats der Nanofiltration mit dem Retentat der Nanofiltration verschneidet, das als alkoholreduziertes Bier mit unterschiedlichen Restextraktgehalten verwendet werden kann.

2. Verfahren nach Anspruch 1, **dadurch gekennzeichnet, dass** dieses mindestens zwei aufeinanderfolgende Ultrafiltrationen mit unterschiedlicher Porengröße umfasst.

3. Verfahren nach einem der Ansprüche 1 oder 2, **dadurch gekennzeichnet, dass** man das bei der Ultrafiltration gewonnene Retentat mit dem Permeat der Nanofiltration verschneidet zur Gewinnung eines Produktbiers und einen Teilstrom des Retentats zurückführt, um diesen einer erneuten Ultrafiltration zu unterziehen.

4. Verfahren nach einem der Ansprüche 1 bis 3, **dadurch gekennzeichnet, dass** man zwei aufeinanderfolgende Ultrafiltrationen mit unterschiedlicher Porengröße durchführt, wobei zunächst eine Ultrafiltration mit größerer Porengröße erfolgt, man das Permeat aus dieser Ultrafiltration einer Ultrafiltration mit geringerer Porengröße unterzieht und man das aus der zweiten Ultrafiltration gewonnene Retentat zur Herstellung eines Produktbiers verwendet.

5. Verfahren nach Anspruch 4, **dadurch gekennzeichnet, dass** man das Retentat der zweiten Ultrafiltration mit dem Permeat einer Nanofiltration verschneidet zur Gewinnung eines Produktbiers.

## Claims

1. Process for the production of beer in which, starting from a starting beer, the concentration of certain components present in this starting beer is enriched and/or decreased, in order to obtain therefrom a product beer having defined components, wherein
- nanofiltration with defined pore size is performed in which a permeate which contains a water-alcohol mixture having low-molecular-weight aroma substances, and a retentate which, in comparison with the starting beer, has a more concentrated residual extract having a higher content of carbohydrates, proteins, divalent and higher valency salts and a similar fraction of alcohols, amino acids, aroma substances, monovalent salts are obtained, and subsequently the permeate and/or the retentate of the nanofiltration is/are used for the production of a product beer,
- an ultrafiltration is performed in which a permeate having reduced protein content, having a higher fraction of low-molecular-weight proteinaceous substances or having a higher fraction of low-molecular-weight sugars and a retentate having an increased fraction of hydrophobic proteinaceous substances are obtained, **characterized in that** the retentate of the ultrafiltration, to set the residual extract content of the permeate of the nanofiltration, is blended with the permeate of the nanofiltration in order to improve the foam behaviour and the full-bodied character of this drink, and/or the retentate of the ultrafiltration, for foam improvement of the retentate of the nanofiltration, is blended with the retentate of the nanofiltration, which can be used as alcohol-reduced beer having differing residual extract contents.

2. Process according to claim 1, **characterized in that** this comprises at least two successive ultra-filtrations using differing pore size.

3. Process according to one of claims 1 or 2, **characterized in that** the retentate obtained in the ultrafiltration is blended with the permeate of the nanofiltration for obtaining a product beer, and a substream of the retentate is recirculated in order to subject this to renewed ultrafiltration.

4. Process according to one of claims 1 to 3, **characterized in that** two successive ultrafiltrations are carried out using differing pore size, wherein first one ultrafiltration proceeds with higher pore size, the permeate from this ultra-filtration is subjected to an ultrafiltration with lower pore size, and the retentate obtained from the second ultrafiltration is used for production of a product beer.

5. Process according to claim 4, **characterized in that** the retentate of the second ultrafiltration is blended with the permeate of a nanofiltration for obtaining a product beer.

## Revendications

1. Procédé de fabrication de bière, dans lequel, en partant d'une bière de départ, on enrichit et/ou on réduit la concentration de certains ingrédients contenus dans cette bière de départ pour obtenir une bière finie avec des ingrédients définis, dans lequel :
- on effectue une nanofiltration avec une taille de pores définie, dans laquelle on obtient un perméat, qui contient un mélange d'eau et d'alcool avec des substances aromatiques de faibles poids moléculaires, et un rétentat, qui contient, par rapport à la bière de départ, un extrait résiduel concentré avec une teneur supérieure en glucides, protéines, sels divalents et de valence supérieure et une fraction similaire d'alcools, d'acides aminés, de substances aromatiques, de sels monovalents, et on utilise ensuite le perméat et/ou le rétentat de la nanofiltration pour fabriquer une bière finie,
- on effectue une ultrafiltration, dans laquelle on obtient un perméat avec une teneur réduite en protéines, une fraction supérieure de protéines de faibles poids moléculaires ou une fraction supérieure de sucres de faibles poids moléculaires, et un rétentat avec une fraction élevée en protéines hydrophobes, **caractérisé en ce que** l'on coupe le rétentat de l'ultrafiltration avec le perméat de la nanofiltration pour ajuster la teneur en extrait résiduel du perméat de la nanofiltration afin d'améliorer le comportement de la mousse et le caractère gouleyant de cette boisson, et/ou **en ce que**, pour améliorer la mousse du rétentat de la nanofiltration, on coupe le rétentat de l'ultrafiltration avec le rétentat de la nanofiltration, qui peut être utilisé comme bière à teneur réduite en alcools avec différentes teneurs en extrait résiduel.

2. Procédé selon la revendication 1, **caractérisé en ce qu'**il comprend au moins deux ultrafiltrations successives avec différentes tailles de pores.

3. Procédé selon l'une quelconque des revendications 1 ou 2, **caractérisé en ce que** l'on coupe le rétentat obtenu lors de l'ultrafiltration avec le perméat de la nanofiltration pour obtenir une bière finie et **en ce que** l'on recycle un flux partiel du rétentat pour le soumettre à une nouvelle ultrafiltration.

4. Procédé selon l'une quelconque des revendications 1 à 3, **caractérisé en ce que** l'on réalise deux ultrafiltrations successives avec différentes tailles de pores, dans lequel on effectue d'abord une ultrafiltration avec une taille de pores plus grande, on soumet le perméat issu de cette ultrafiltration à une ultrafiltration avec une taille de pores inférieure et on utilise le rétentat obtenu lors de la seconde ultrafiltration pour produire une bière finie.

5. Procédé selon la revendication 4, **caractérisé en ce que** l'on coupe le rétentat de la seconde ultrafiltration avec le perméat d'une nanofiltration pour obtenir une bière finie.
